# FASCICULE DE BREVET EUROPEEN

(11) **EP 2 556 991 B1**
(45) Date de publication et mention de la délivrance du brevet: **01.06.2016**
(21) Numéro de dépôt: 12179609.8
(22) Date de dépôt: 08.08.2012
(51) Int. Cl.: B60N 2/06, B60N 2/24, B60N 2/68

(54) **Banquette pour véhicule automobile et véhicule automobile equipé d'au moins une telle banquette**
Bank für Kraftfahrzeug, und mit mindestens einer solchen Bank ausgestattetes Kraftfahrzeug
Bench seat for a motor vehicle and motor vehicle provided with at least one such bench seat

(30) Priorité: 10.08.2011 FR 1157280
(43) Date de publication de la demande: 13.02.2013
(73) Titulaire: Scora, 69720 Saint-Bonnet-de-Mure (FR)
(72) Inventeur: Ctorza, Serge, 94700 Maison Alfort (FR)
(74) Mandataire: Myon, Gérard Jean-Pierre

(56) Documents cités:
- EP-A1- 1 498 300
- DE-A1-102008 029 261
- DE-A1-102010 054 185
- FR-A1- 2 946 579
- US-B1- 6 648 393

## Description

La présente invention concerne une banquette adaptée pour équiper un véhicule automobile. L'invention concerne également un véhicule automobile équipé d'au moins d'une telle banquette. Le domaine de l'invention est celui des dispositifs d'assises ou sièges automobiles.

L'installation d'un dispositif d'assise dans un véhicule automobile est soumise à des réglementations, qui visent à assurer la sécurité des passagers du véhicule en cas de choc sur le véhicule. Chaque dispositif d'assise d'un véhicule est ainsi soumis à des procédures d'essais, permettant d'évaluer le comportement des éléments constitutifs du dispositif, notamment des sièges et des ceintures de sécurité, dans différentes configurations de choc. Pour limiter les dommages corporels des passagers, il est nécessaire de prévoir une structure et un ancrage du dispositif d'assise qui minimisent les risques de déformation et d'arrachement du dispositif en cas de collision.

Il est connu d'installer une banquette comprenant une rangée de sièges dans un véhicule automobile, tel qu'un camping-car ou un autobus, en fixant la structure de la banquette par rapport au châssis du véhicule. L'ancrage des ceintures de sécurité est réalisé, d'une part, au niveau des montants latéraux du véhicule pour les sièges latéraux de la banquette et, d'autre part, au niveau du plancher du véhicule pour les sièges centraux. Pour satisfaire aux réglementations de sécurité, il est alors nécessaire de renforcer la structure du véhicule dans chaque zone d'ancrage des ceintures de sécurité. Il en résulte une augmentation du temps de montage de la banquette dans le véhicule, ainsi qu'une augmentation du poids du véhicule.

Le préambule de la revendication 1 correspondant au document FR-A-2 946 579 décrit un véhicule utilitaire à cabine modulable, équipée d'un socle rapporté sur le plancher de la cabine, d'une banquette délimitant deux places et d'un siège délimitant une place. Autrement dit, ce document décrit une banquette comprenant un siège à deux places et un siège à une place. Les sièges comprennent une structure incluant, pour chacun d'eux, une carcasse métallique et un carter rapporté sur la carcasse métallique. En particulier, la partie arrière formant dossier comprend un carter de dossier monté sur des carters latéraux. Le carter de dossier reçoit des appuis-tête, des accoudoirs pivotants et des coussins. Les sièges et sont susceptibles d'être montés de façon amovible sur le socle. A cet effet, le socle comporte un étrier actif, un étrier passif, ainsi que des évidements de réception d'un piètement des sièges. Un des objectifs de ce document est de pouvoir monter et démonter facilement un siège à deux places et un siège à une place côte à côte dans la cabine d'un véhicule. En l'espèce, la fixation au socle ne procure pas une rigidité suffisante à la structure de la banquette. En outre, la structure comporte des parties métalliques, de nombreux éléments mobiles et des carters de siège. Autrement dit, la banquette est complexe, encombrante et coûteuse, ce que la présente invention vise à éviter. De plus, les carters de dossier présentent les mêmes désavantages qu'une potence. Par ailleurs, ce document ne fournit aucune indication sur les points d'ancrage des ceintures de sécurité.

FR-A-2 903 351 décrit une banquette sans ancrage sur la caisse du véhicule. Cette banquette satisfait aux réglementations de sécurité, tout en s'accompagnant d'un temps de montage limité dans le véhicule et en présentant un poids réduit. Cette banquette est globalement satisfaisante, mais comporte une potence pour la fixation des ceintures de sécurité, ce qui n'est pas totalement satisfaisant.

Le but de l'invention est d'améliorer les banquettes existantes, notamment en termes de simplicité de montage dans un véhicule, de poids de la structure et d'autonomie des ceintures de sécurité.

A cet effet, l'invention a pour objet une banquette telle que définie à la revendication 1.

Ainsi, l'invention permet de réduire le poids de la banquette, tout en respectant les réglementations de sécurité, en particulier en termes de rigidité de la structure et d'autonomie de fixation des ceintures de sécurité, avec trois points d'ancrage positionnés sur la banquette sans potence et sans utiliser la caisse du véhicule. Le montage de la banquette est facilité, procurant un gain de temps de plusieurs heures par rapport aux banquettes existantes. Egalement, la banquette présente une réduction de poids de l'ordre de 30 % environ par rapport aux banquettes munies d'une potence. En l'absence de potence, la structure de banquette est rigidifiée de manière simple et efficace par les moyens de rigidification s'étendant entre les carcasses. Les configurations particulières des points d'ancrage de ceintures et des moyens de rigidification de la structure permettent conjointement d'obtenir une banquette améliorée, de manière simple mais particulièrement avantageuse dans le domaine des sièges automobiles. En outre, les moyens de rigidification empêchent les passagers de démonter un siège correspondant à une place assise par rapport aux autres éléments de la banquette, évitant ainsi de porter atteinte à l'intégrité et à la rigidité de la structure de cette banquette.

D'autres caractéristiques avantageuses de l'invention, prise isolément ou en combinaison, sont définies aux revendications 2 à 13.L'invention a également pour objet un véhicule automobile équipé d'au moins une banquette telle que mentionnée ci-dessus.

L'invention sera mieux comprise à la lecture de la description qui va suivre, donnée uniquement à titre d'exemple non limitatif et faite en référence aux dessins annexés sur lesquels :
- la figure 1 est une vue en perspective éclatée d'une banquette conforme à l'invention, comprenant une structure de support pour coussins de siège délimitant quatre places assises, des ceintures de sécurité équipant chaque place, ainsi que des éléments de rigidification de la structure ;
- la figure 2 est une vue en perspective analogue à la figure 1, montrant la banquette assemblée, avec la structure masquée par les coussins qui est représentée en pointillés ;
- la figure 3 est une vue en perspective analogue à la figure 2, montrant la banquette avec les coussins masquant la structure ;
- la figure 4 est une vue selon la flèche IV à la figure 2, les coussins n'étant pas représentés ;
- la figure 5 est une vue de côté selon la flèche V à la figure 3, la banquette comprenant en outre une coque arrière ; et
- les figures 6 à 10 sont des vues analogues respectivement aux figures 1 à 5, pour une banquette à deux places conforme à un deuxième mode de réalisation de l'invention ;

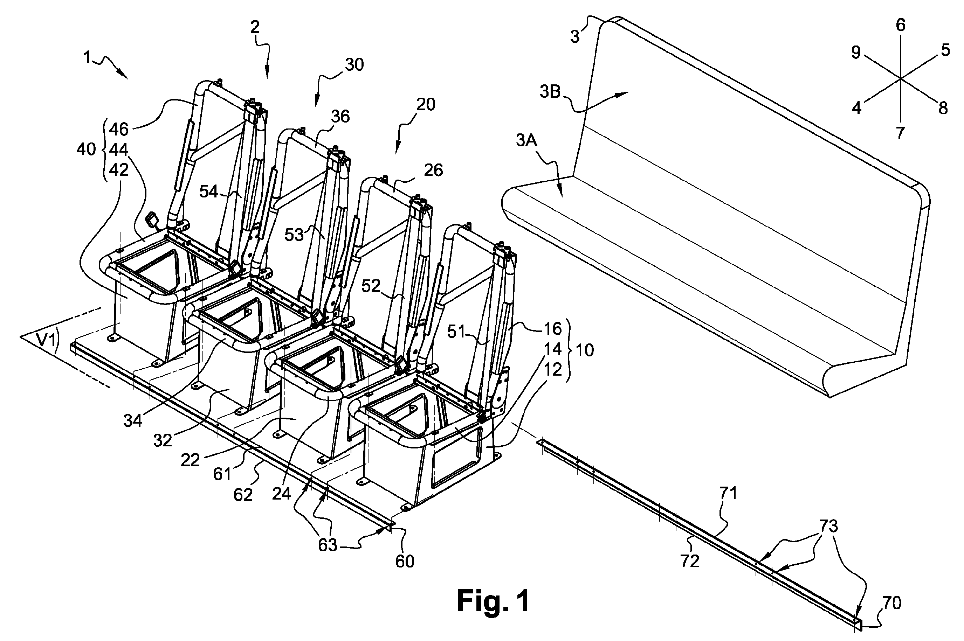

Sur les figures 1 à 5 est représentée une banquette 1 conforme à l'invention.

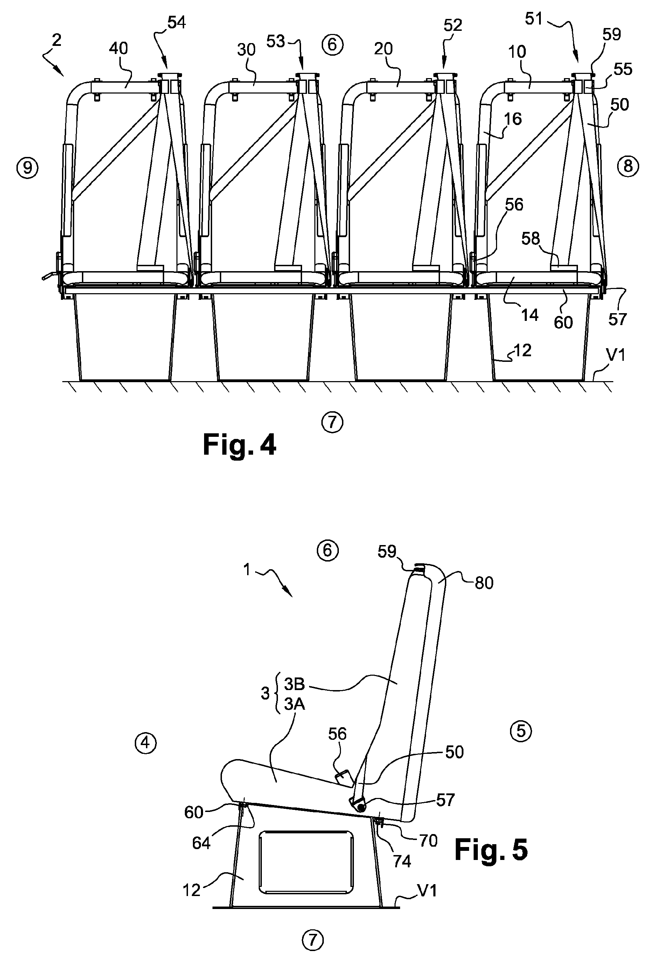

La banquette 1 est adaptée pour équiper un véhicule automobile V1, également conforme à l'invention. Le véhicule V1 peut être un véhicule de loisir, par exemple un camping car, un véhicule de transport en commun, par exemple un autocar ou un autobus, ou un véhicule industriel, par exemple un véhicule utilitaire. Seul le plancher du véhicule V1 est représenté schématiquement aux figures 4 et 5, dans un but de simplification. La banquette 1, indépendante de la caisse du véhicule V1, peut être implantée facilement en différents emplacements du plancher du véhicule V1.

Pour faciliter le repérage des différentes parties de la banquette 1 dans l'espace, on définit un côté avant 4 correspondant à l'avant du véhicule V1, un côté arrière 5 opposé au côté avant 4, un côté supérieur 6 tourné vers le plafond non représenté du véhicule V1, un côté inférieur 7 au niveau duquel est situé le plancher du véhicule V1, ainsi qu'un côté gauche 8 et un côté droit 9 localisés par rapport à une direction longitudinale arrière 5 - avant 4 du véhicule V1. Les côtés 8 et 9 définissent une direction transversale 8-9 du véhicule V1.

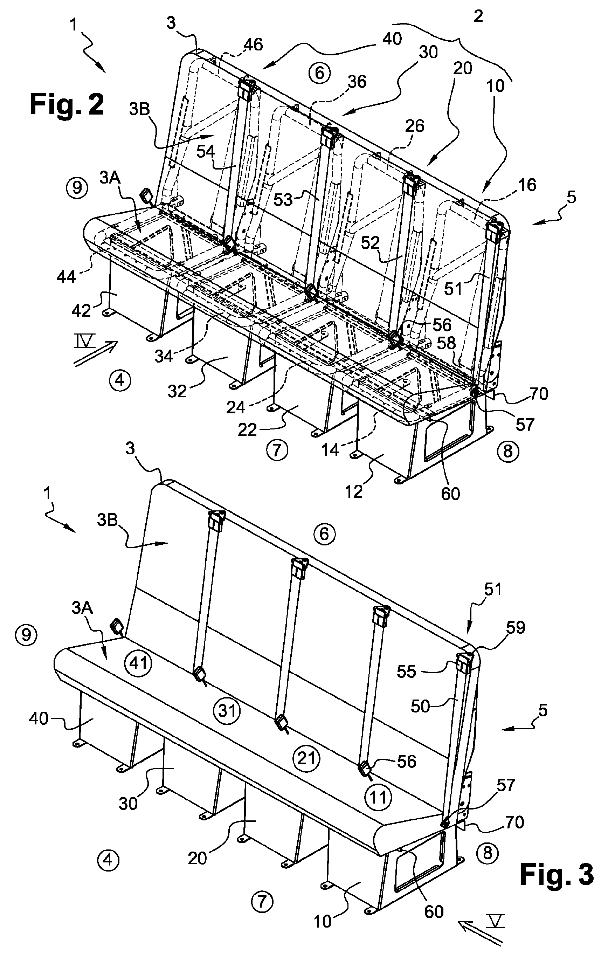

La banquette 1 comprend une structure sans potence 2 et des coussins de sièges 3 supportés par la structure 2. Une potence est une poutre métallique, qui permet de rigidifier une structure de banquette, de servir de point d'ancrage à des ceintures de sécurité, mais est pesante et encombrante. La structure 2 comprend quatre carcasses distinctes 10, 20, 30 et 40, disposées côte à côte suivant la direction transversale 8-9 du véhicule V1 et tournées vers l'avant 4. Les coussins 3 comprennent une partie d'assise 3A tournée vers le haut 6 et une partie dossier 3B tournée vers l'avant 4. Les carcasses 10-40 constituant la structure 2, ainsi que les coussins 3, délimitent ensemble quatre places assises 11, 21, 31 et 41 de la banquette 1. Les places 11-41 sont montrées à la figure 3 et prévues pour recevoir jusqu'à quatre passagers du véhicule V1.

Les carcasses 10-40 sont de préférence identiques entre elles, ce qui simplifie la fabrication de la banquette 1. En alternative, les carcasses 10-40 peuvent être différentes les unes des autres, mais présentent de préférence les mêmes dimensions suivant la direction transversale 8-9. La carcasse 10 comprend un piétement 12, une assise 14 et un dossier 16. Sur l'exemple des figures 1 à 5, le piétement 12 est du type socle creux, adapté pour être fixé au plancher du véhicule V1. Le piétement 12 supporte l'assise 14, qui supporte le dossier 16. L'assise 14 est tournée vers le haut 6, tandis que le dossier 16 est tourné vers l'avant 4. De même, les carcasses 20, 30 et 40 comprennent des piétements, respectivement 22, 32, 42, des assises, respectivement 24, 34, 44, ainsi que des dossiers, respectivement 26, 36, 46.

La fixation des piétements 22-42 au plancher du véhicule V1 peut être réalisée de différentes manières, par exemple par vissage, boulonnage, soudage et/ou collage sur un ou plusieurs rails, une ou plusieurs plaques, ou par tout autre moyen adapté à la présente application.

Les coussins 3 de la banquette 1 sont monoblocs. A titre d'exemple non limitatif, les coussins 3 sont constitués d'un bloc de mousse polymère qui est conformé en L et revêtu de tissu synthétique. La partie d'assise 3A des coussins 3 s'appuie sur l'ensemble des assises 14-44, tandis que la partie dossier 3B des coussins 3 s'appuie sur l'ensemble des dossiers 16-46. Les coussins 3 sont fixés à la structure 2 par vissage, boulonnage, collage et/ou pénétration de certaines parties de carcasses 10-40 dans les coussins 3.

Pour chaque place 11, 21, 31 et 41, la banquette 1 comporte une ceinture de sécurité, respectivement 51, 52, 53 et 54. Les ceintures 51-54 sont identiques, de sorte que seule la ceinture 51 équipant la place 11 est décrite ci-après.

Comme montré aux figures 3 et 4, la ceinture 51 comporte une sangle 50 munie d'un organe mâle d'attache 55 apte à coulisser le long de la sangle 50, ainsi qu'une boucle femelle de fermeture 56 à bouton poussoir, prévue pour immobilier l'organe mâle 55 lorsque la ceinture 51 est bouclée. La boucle femelle 56 est fixée du côté droit 9 de l'assise 14 et constitue un premier point d'ancrage de la ceinture 51. La sangle 50 est fixée par une première extrémité 50a sur un organe d'ancrage 57 situé du côté gauche 8 de l'assise 14, cet organe 57 constituant un deuxième point d'ancrage de la ceinture 51. La sangle 50 remonte sur l'avant 4 et le côté gauche 8 du dossier 16, traverse un organe de guidage 59 fixé en haut 6 du dossier 16, puis redescend sur l'arrière 5 du dossier 16 jusqu'à un enrouleur 58 fixé derrière l'assise 14. La sangle 50 peut se dérouler et s'enrouler dans l'enrouleur 58 dans lequel elle est ancrée par une deuxième extrémité 50b opposée à sa première extrémité 50a. L'enrouleur 58 constitue un troisième point d'ancrage de la ceinture 51.

Ainsi, chaque ceinture 51-54 comprend trois points d'ancrage 56, 57, 58 fixés à la banquette 1, évitant ainsi leur fixation à une potence ou à un élément de caisse du véhicule V1. Une telle configuration d'ancrage des ceintures permet donc à la fois d'alléger la structure 2 et de faciliter le montage de la banquette 1.

Afin de renforcer la structure 2 tout en évitant d'utiliser une poutre de potence, la banquette 1 comprend des moyens 60, 70 de rigidification de la structure 2.

Plus précisément, la banquette 1 comprend deux profilés ou barres métalliques rigides 60 et 70 reliant les carcasses 10-40 entre elles. La première barre 60 est conformée comme une équerre en L, avec une partie horizontale 61 munie de trous de fixation 63, ainsi qu'une partie verticale 62 monobloc avec la partie 61. De même, la deuxième barre 70 est conformée comme une équerre en L, avec une partie horizontale 71 munie de trous de fixation 73, ainsi qu'une partie verticale 72 monobloc avec la partie 71. Lorsqu'elles sont fixées sur la structure 2, les barres 60 et 70 s'étendent suivant la direction transversale 8-9, entre le bord gauche 8 et le bord droit 9 de la structure 2, en étant fixés rigidement sur chacune des carcasses 10-40. Plus précisément, la barre 60 est fixée dessous et sur l'avant 4 des assises 14-44, tandis que la barre 70 est fixée dessous et sur l'arrière 5 des assises 14-44, par le biais de boulons de fixation 64 et 74 visibles à la figure 5. Chaque barre 60 et 70 coopère mécaniquement avec l'ensemble des assises 14-44.

Grâce aux barres de renfort 60 et 70, les carcasses 10-40 sont solidarisées les unes aux autres, afin d'éviter tout déplacement relatif entre elles, autrement dit tout déplacement au sein de la structure 2. En particulier, les barres de renfort 60 et 70 évitent tout déplacement manuel d'une des carcasses 10-40 par rapport à une autre carcasse 10-40, lorsque la banquette 1 est installée sur le plancher du véhicule V1, contrairement aux systèmes de sièges existants où il est courant de prévoir des sièges amovibles les uns par rapport aux autres par une simple action manuelle des passagers.

Si la liaison de l'une des carcasses 10-40 avec le plancher du véhicule V1 est fragilisée, les autres carcasses 10-40 empêchent un déplacement de cette carcasse. Les normes de sécurité sont respectées, sans nécessiter l'utilisation d'une poutre de potence lourde et encombrante. En fonction de leur forme, leur matériau, leurs dimensions et leur positionnement, les barres 60 et 70 sont adaptées pour rigidifier la structure 2 de manière ciblée, simple et efficace.

Avantageusement, les barres 60 et 70 sont distinctes de moyens de fixation des piétements 12-42 au plancher du véhicule automobile V1. En l'absence des barres 60 et 70, les moyens de fixation des piétements 12-42 au plancher ne seraient pas suffisants pour rigidifier la structure 2 de manière fiable et sécurisée.

Optionnellement, comme montré à la figure 5, la banquette 1 comprend également une coque 80 recouvrant l'arrière 5 des dossiers 16-46 et de la partie dossier 3B des coussins 3. Cette coque 80 est de préférence réalisée en matière plastique rigide, moulée pour former une couche mince épousant la forme de la structure 2 et des coussins 3. Cette coque 80 remplit uniquement une fonction esthétique, et non de rigidification de la structure 2.

Lors de la fabrication de la banquette 1, chaque carcasse 10-40 est assemblée, puis les ceintures de sécurité 51-54 sont montées sur les carcasses 10-40 correspondantes. Les carcasses 10-40 sont ensuite disposées côte à côte, puis reliées par les barres 60 et 70 afin de former la structure rigide 2. Enfin, les coussins 3 sont fixés à la structure 2, puis la coque 80 peut être mise en place.

Une fois assemblée, la banquette 1 forme un ensemble monobloc facilement transportable, par exemple par camion, depuis une unité d'assemblage de la banquette 1 vers une unité d'assemblage du véhicule V1. L'absence de potence réduit le poids et l'encombrement de la banquette 1 et donc le coût du transport. Les moyens de rigidification 60 et 70 maintiennent l'intégrité de la structure 2 durant le transport.

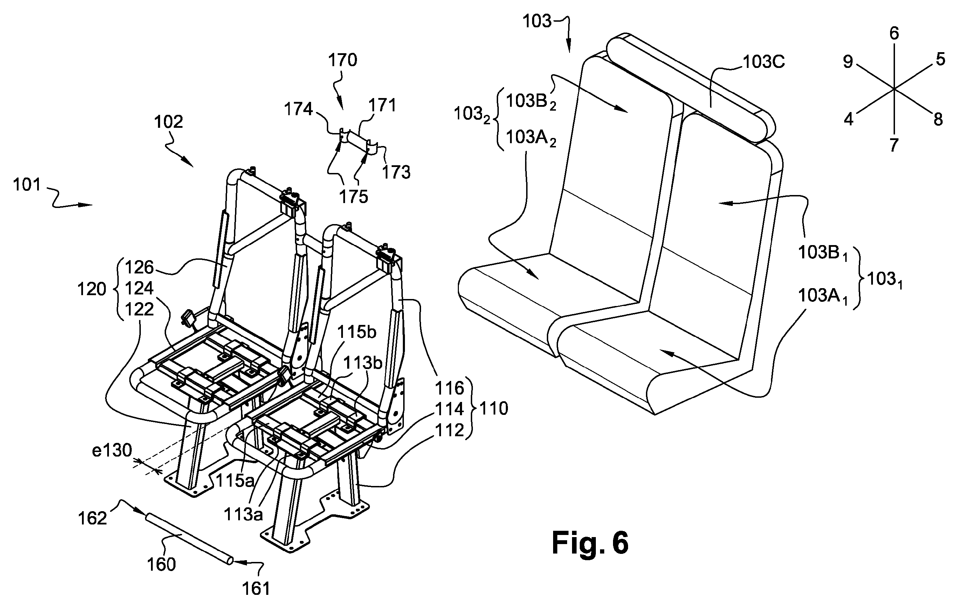

Sur les figures 6 à 10 est représenté un deuxième mode de réalisation d'une banquette 101 conforme à l'invention.

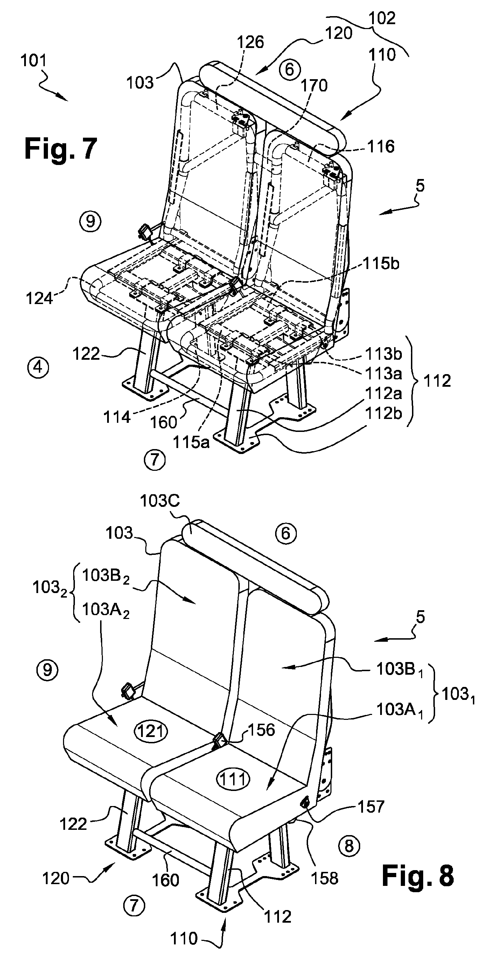

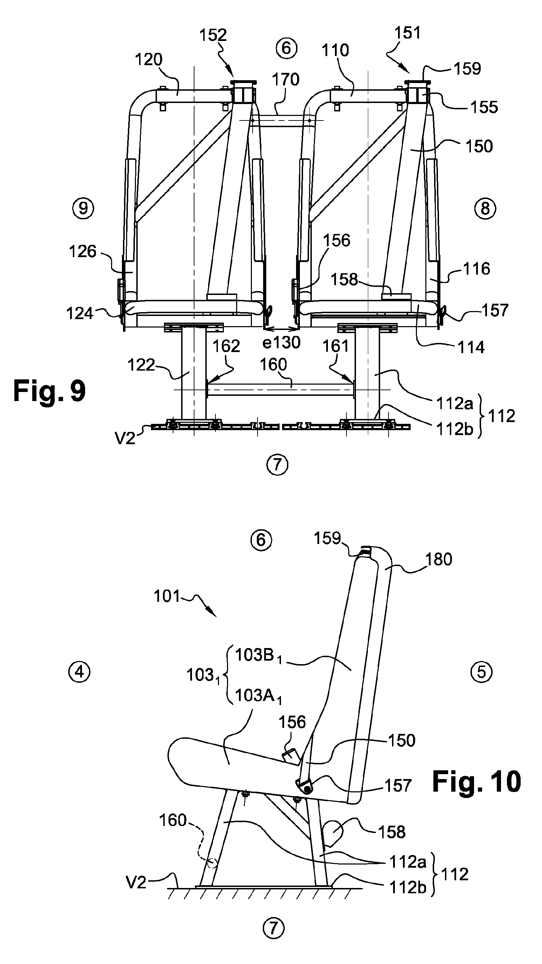

La banquette 101 définit deux places assises 111 et 121, montrées à la figure 8 ,et est adaptée pour équiper un véhicule automobile V2. Le véhicule V2 peut être identique ou différent du véhicule V1 du premier mode de réalisation. Par exemple, le véhicule V2 peut être moins large que le véhicule V1 entre les côtés 8 et 9, de sorte que seule une banquette 101 comprenant deux places assises 111 et 121 peut être installée dans l'habitacle de ce véhicule V2. Selon un autre exemple, le véhicule V2 peut être plus large que le véhicule V1, de sorte que deux banquettes 101 peuvent être installées dans l'habitacle, de part et d'autre une allée centrale. Seul le plancher du véhicule V2 est représenté à la figure 9 et schématisé à la figure 10, dans un but de simplification.

Certains éléments constitutifs de la banquette 101 sont comparables aux éléments constitutifs de la banquette 1 du premier mode de réalisation, décrit plus haut, et portent les mêmes références augmentées de 100. Il s'agit de la structure 102, des coussins de sièges 103, des carcasses 110 et 120, des piétements 112 et 122, des assises 114 et 124, des dossiers 116 et 126, des ceintures 151 et 152 incluant chacun une sangle 150, un organe mâle 155, un boucle femelle 156, un organe d'ancrage 157, un enrouleur 158 et un organe de guidage 159, des moyens de rigidification 160 et 170, ainsi que de la coque 180.

La principale différence avec la banquette 1 se retrouve au niveau des moyens de rigidification de la structure 102. D'autres différences se retrouvent au niveau des coussins 103, des piétements 112 et 122 et de la présence de moyens de réglage de l'écartement entre les carcasses 110 et 120. La sangle 150 est montrée uniquement aux figures 9 et 10 dans un but de simplification.

Les coussins 103 sont individuels et non monoblocs. Les coussins 103 comprennent un premier coussin 103₁ constitué par une partie d'assise 103A₁ et une partie dossier 103B₁ délimitant la première place 111, un deuxième coussin 103₂ constitué par une partie d'assise 103A₂ et une partie dossier 103B₂ délimitant la seconde place 121, ainsi qu'un appui-tête 103C reliant les parties dossiers 103B₁ et 103B₂ du côté supérieur 6.

Le piétement 112 comprend deux pieds 112a sensiblement verticaux qui s'étendent depuis un socle 112b sensiblement horizontal destiné à venir en appui sur le plancher sur véhicule V2. Le piétement 122 est identique au piétement 112. Les pieds 112 et 122 comprennent également des organes 113a et 113b de fixation à l'assise 114 ou 124 correspondante. Plus précisément, les organes 113a et 113b permettent, par serrage, de plaquer des barres transversales, respectivement 115a et 115b, apparentant aux assises 114 et 124, contre les pieds 112a des piétements 112 et 122. Ces organes 113a et 113b sont amovibles, permettant de régler la position relative des barres 115a et 115b, et donc des assises 114 et 124, par rapport aux piétements 112 et 122. Seuls les éléments 113a, 113b, 115a, 115b montés sur la carcasse 110 sont représentés aux figures 6, 7, 9 et 10 dans un but de simplification, étant entendu que les éléments montés sur la carcasse 120 sont comparables.

Ainsi, chaque assise 114 ou 124 peut coulisser par rapport à son piétement 112 ou 122. En d'autres termes, les organes 113a,113b et les barres 115a, 115b constituent des moyens de réglage d'un écartement latéral e130 entre les carcasses 110 et 120. Comme montré aux figures 6 et 9, cet écart e130 peut être mesuré au niveau des assises 114 et 124 suivant la direction transversale 8-9. En alternative, l'écart e130 peut être mesuré entre les piétements 112 et 122, lesquels peuvent être plus ou moins écartés pour s'adapter au plancher du véhicule V2, tandis que la distance entre les assises 114 et 124 reste invariable. Autrement dit, de préférence, une partie seulement des carcasses 110 et 120 peut coulisser suivant la direction transversale 8-9 grâce aux moyens de réglage de l'écartement latéral e130.

La banquette 101 comprend également deux barres ou tubes métalliques rigides 160 et 170 reliant les carcasses 110 et 120 entre elles. La première barre 160 est un tube cylindrique s'étendant entre deux extrémités longitudinales 161 et 162. La deuxième barre 170 comprend un tube cylindrique central 171 s'étendant entre deux extrémités longitudinales 173 et 174, lesquelles forment des demi-cylindres d'accrochage à des montants des dossiers 116 et 126 et sont munies de trous de fixation 175. Lorsqu'elles sont fixées sur la structure 102, les barres 160 et 170 s'étendent suivant la direction transversale 8-9, en étant fixées rigidement sur chacune des carcasses 110 et 120. Plus précisément, la barre 160 est soudée par ses extrémités 161 et 162 aux pieds 112 et 122, tandis que la barre 170 est fixée entre les dossiers 116 et 126, comme montré aux figures 7 et 9.

En l'espèce, les barres de rigidification 160 et 170 solidarisent les carcasses 110 et 120 l'une à l'autre en évitant tout déplacement relatif, notamment tout déplacement manuel, d'une partie d'une des carcasses 110 ou 120 par rapport à l'autre carcasse 110 ou 120.

Selon une variante non représentée où la banquette 101 comprend plus de deux places assises 111 et 121, et donc plus de deux carcasses 110 et 120, alors une barre 160 et une barre 170 sont agencées entre chaque paire de carcasses constituant la structure 102.

Selon une autre variante non représentée, les moyens de réglage de l'écartement latéral e130 entre les carcasses 110 et 120 peuvent être différents de ceux décrits ci-dessus.

Quel que soit le mode de réalisation, la banquette selon l'invention peut comporter un nombre de places différents des banquettes 1 et 101. La banquette comprend au moins deux places assises, de préférence deux, trois, quatre ou cinq places contigües, correspondant à autant de carcasses de sièges distinctes formant la structure. Les coussins peuvent être monoblocs ou individuels.

Selon une autre variante non représentée, les carcasses 10-40 et 110-120 et peuvent être conformées différemment de celles décrites ci-dessus, sans sortir du cadre de l'invention. En particulier, la banquette peut comporter tout type de piétements, quels que soient leur forme et leur agencement, sans sortir du cadre de l'invention. Dans ce cas, les moyens 60, 70, 160, 170 de rigidification de la structure 2 ou 102 sont adaptés en conséquence pour relier au moins certaines des parties de carcasses.

Selon une autre variante non représentée, le fonctionnement et la structure des ceintures 51-54 et 151-152 peuvent être différents de ceux décrits ci-dessus. Par exemple, les systèmes de ceintures peuvent ne pas comprendre d'enrouleurs. Selon un autre exemple, certains points d'ancrage 56-58 ou 156-158 peuvent être disposés en d'autres emplacements de la structure 2 ou 102. Dans tous les cas, chaque ceinture comporte trois points d'ancrage sur la banquette, sans potence et sans fixation sur la caisse du véhicule.

Selon une autre variante non représentée, les moyens 60, 70, 160, 170 de rigidification de la structure 2 ou 102 peuvent être conformés, agencés ou combinés de manière différente de ceux des figures 1 à 10. Par exemple, les barres de rigidification 60 et 70 d'une part, 160 et 170 d'autre part, sont interchangeables entre les deux modes de réalisation des banquettes 1 et 101. Selon un autre exemple, les barres de rigidification 60, 70, 160 et 170 peuvent présenter des formes, des matériaux ou des dimensions différentes. Selon un autre exemple, des éléments de rigidification peuvent relier à la fois les piétements, les assises et les dossiers, ou au moins certains d'entre eux. Selon d'autres exemples, les moyens de rigidification peuvent être mis en oeuvre par vissage, boulonnage, clipsage, soudage, collage des carcasses entre elles, avec ou sans éléments intermédiaires. Dans tous les cas, les moyens de rigidification de la structure sont conçus pour présenter un compromis entre, d'une part, une résistance mécanique élevée et, d'autre part, un poids et un encombrement réduits.

En outre, les caractéristiques techniques des différents modes de réalisation peuvent être, en totalité ou pour certaines d'entre elles, combinées entre elles. Ainsi, la banquette peut être adaptée en termes de capacité, de coût et d'ergonomie.

## Revendications

1. Banquette (1 ; 101) adaptée pour équiper un véhicule automobile (V1 ; V2), la banquette (1 ; 101) comprenant :
- une structure (2 ; 102) qui supporte des coussins de sièges (3 ; 103) délimitant au moins deux places (11,21,31,41 ; 111, 121) et,
- pour chaque place, une ceinture de sécurité (51, 52, 53, 54 ; 151, 152) munie de trois points d'ancrage (56, 57, 58 ; 156, 157, 158) fixés sur la banquette (1 ; 101) sans potence,
la structure (2 ; 102) comprenant au moins deux carcasses (10, 20, 30, 40 ; 110, 120) qui sont distinctes, disposées côte à côte et pourvues chacune d'un piètement (12, 22, 32, 42 ; 112, 122), d'une assise (14, 24, 34, 44 ; 114, 124) et d'un dossier (16, 26, 36, 46 ; 116, 126) sur lesquels s'appuient les coussins de siège (3 ; 103),
**caractérisée :**
- **en ce que** la banquette (1 ; 101) comprend des moyens (60, 70 ; 160, 170) de rigidification de la structure (2 ; 102) qui sont distincts de moyens de fixation des piétements (12, 22, 32, 42 ; 112, 122) à un plancher du véhicule automobile (V1 ; V2) et qui relient les carcasses (10, 20, 30, 40 ; 110, 120) entre elles.

2. Banquette (1) selon la revendication 1, **caractérisée en ce que** les carcasses (10, 20, 30, 40 ; 110, 120) ont les mêmes dimensions suivant une direction transversale (8-9) selon laquelle les carcasses (10, 20, 30, 40 ; 110, 120) sont alignées côte à côte.

3. Banquette (1) selon l'une des revendications précédentes, **caractérisée en ce que** les moyens (60, 70 ; 160, 170) de rigidification de la structure (2 ; 102) maintiennent l'intégrité de la structure (2 ; 102) durant son transport, par exemple depuis une unité d'assemblage de la banquette (1) vers une unité d'assemblage du véhicule automobile (V1 ; V2).

4. Banquette (101) selon l'une des revendications précédentes, **caractérisée en ce qu'**au moins certains des moyens de rigidification (60, 70) relient les assises (14, 24, 34, 44) des carcasses (10, 20, 30, 40).

5. Banquette (101) selon l'une des revendications précédentes, **caractérisée en ce qu'**au moins certains (170) des moyens de rigidification (160, 170) relient les dossiers (116, 126) des carcasses (110, 120).

6. Banquette (101) selon l'une des revendications précédentes, **caractérisé en ce qu'**au moins certains (160) des moyens de rigidification (160, 170) relient les piètements (112, 122) des carcasses (110, 120).

7. Banquette (1 ; 101) selon l'une des revendications précédentes, **caractérisé en ce que** les moyens de rigidification (60, 70 ; 160, 170) comprennent des barres métalliques rigides reliant les carcasses (10, 20, 30, 40 ; 110, 120).

8. Banquette (1) selon l'une des revendications 1 à 7, **caractérisée en ce que** les coussins de sièges (3) sont monoblocs, avec une partie d'assise (3A) qui s'appuie sur toutes les assises (14, 24, 34, 44) et une partie dossier (3B) qui s'appuie sur tous les dossiers (16, 26, 36, 46).

9. Banquette (101) selon l'une des revendications 1 à 7, **caractérisée en ce que** les coussins de sièges (103) comprennent des coussins individuels (103₁ ; 103₂) avec, pour chaque place (111 ; 121), une partie d'assise (103A₁ ; 103A₂) qui s'appuie sur l'assise (114 ; 124) et une partie dossier (103B₁ ; 103B₂) qui s'appuie sur le dossier (116 ; 126) de la carcasse (110 ; 120) correspondant à cette place (111 ; 121).

10. Banquette (1) selon l'une des revendications précédentes, **caractérisée en ce que** les moyens (60, 70 ; 160, 170) de rigidification solidarisent les carcasses (10, 20, 30, 40 ; 110, 120) les unes aux autres en évitant tout déplacement relatif, notamment tout déplacement manuel, d'au moins une partie d'une des carcasses (10, 20, 30, 40 ; 110, 120) par rapport à une autre carcasse (10, 20, 30, 40 ; 110, 120) au sein de la structure (2) de la banquette (1).

11. Banquette (1) selon l'une des revendications précédentes, **caractérisée en ce que** les moyens (60, 70) de rigidification solidarisent les carcasses (10, 20, 30, 40) les unes aux autres en évitant tout déplacement relatif, notamment tout déplacement manuel, d'une carcasse (10, 20, 30, 40) par rapport aux autres carcasses (10, 20, 30, 40) au sein de la structure (2) de la banquette (1).

12. Banquette (101) selon l'une des revendications 1 à 10, **caractérisée en ce qu'**elle comporte des moyens (113a, 113b, 115a, 115b) de réglage d'un écartement latéral (e130) entre les carcasses (110, 120), l'écartement (e130) étant réglable suivant une direction transversale (8-9) selon laquelle les carcasses (110, 120) sont alignées côte à côte.

13. Banquette (101) selon la revendication 12, **caractérisée en ce qu'**une partie seulement des carcasses (110, 120) coulisse suivant la direction transversale (8-9) grâce aux moyens (113a, 113b, 115a, 115b) de réglage de l'écartement latéral (e130).

14. Véhicule automobile (V1 ; V2), **caractérisé en ce qu'**il est équipé d'au moins une banquette (1 ; 101) selon l'une des revendications 1 à 13.

## Patentansprüche

1. Sitzbank(1; 101) zum Einbauen in ein Kraftfahrzeug (V1; V2), wobei die Sitzbank (1; 101) Folgendes umfasst:
- ein Gestell (2; 102) als Träger für Sitzkissen (3; 103), welche zumindest zwei Sitzplätze (11, 21, 31, 41; 111, 121) voneinander abgrenzen, und
- für eden Sitzplatz einen mit drei an der Sitzbank (1; 101) ohne Halterung fixierten Verankerungspunkten (56, 57, 58; 156, 157, 158) versehenen Sicherheitsgurt (51, 52, 53, 54; 151, 152), wobei das Gestell (2; 102) zumindest zwei Aufbauten (10, 20, 30, 40;
110, 120) umfasst, die sich voneinander unterscheiden, nebeneinander angeordnet sind und jeweils mit einem Fußteil (12, 22, 32, 42; 112, 122), mit einer Sitzfläche (14, 24, 34, 44; 114, 124) und mit einer Rückenlehne (16, 26, 36, 46; 116, 126), auf bzw. an welchen sich die Sitzkissen (3; 103) abstützen, ausgestattet sind,
**dadurch gekennzeichnet,**
- **dass** die Sitzbank (1; 101) Mittel (60, 70; 160, 170) zum Versteifen des Gestells (2; 102) umfasst, die sich von Mitteln zum Fixieren der Fußteile (12, 22, 32, 42; 112, 122) an einem Fußboden des Kraftfahrzeugs (V1; V2) unterscheiden und die die Aufbauten (10, 20, 30, 40; 110, 120) untereinander verbinden.

2. Sitzbank (1) nach Anspruch 1, **dadurch gekennzeichnet, dass** die Aufbauten (10, 20, 30, 40; 110, 120) dieselben Dimensionen gemäß einer Querrichtung (8-9) aufweisen, in welcher die Aufbauten (10, 20, 30, 40; 110, 120) nebeneinander aufgereiht sind.

3. Sitzbank (1) nach einem der vorangehenden Ansprüche, **dadurch gekennzeichnet, dass** die Mittel (60, 70; 160, 170) zum Versteifen des Gestells (2; 102) die Unversehrtheit des Gestells (2; 102) während eines Transports, zum Beispiel von einer Montageeinheit der Sitzbank (1) zu einer Montageeinheit des Kraftfahrzeugs (V1; V2), bewahren.

4. Sitzbank (101) nach einem der vorangehenden Ansprüche, **dadurch gekennzeichnet, dass** zumindest Einige der Versteifungsmittel (60, 70) die Sitzflächen (14, 24, 34, 44) der Aufbauten (10, 20, 30, 40) verbinden.

5. Sitzbank (101) nach einem der vorangehenden Ansprüche, **dadurch gekennzeichnet, dass** zumindest Einige (170) der Versteifungsmittel (160, 170) die Rückenlehnen (116, 126) der Aufbauten (110, 120) verbinden.

6. Sitzbank (101) nach einem der vorangehenden Ansprüche, **dadurch gekennzeichnet, dass** zumindest Einige (160) der Versteifungsmittel (160, 170) die Fußteile (112, 122) der Aufbauten (110, 120) verbinden.

7. Sitzbank (1; 101) nach einem der vorangehenden Ansprüche, **dadurch gekennzeichnet, dass** die Versteifungsmittel (60, 70; 160, 170) starre Metallstangen umfassen, welche die Aufbauten (10, 20, 30, 40; 110, 120) verbinden.

8. Sitzbank (1) nach einem der Ansprüche 1 bis 7, **dadurch gekennzeichnet, dass** die Sitzkissen (3) einteilig ausgebildet sind, mit einem Sitzflächenabschnitt (3A), der sich auf allen Sitzflächen (14, 24, 34, 44) abstützt, und einem Rückenlehnenabschnitt (3B), der sich an allen Rückenlehnen (16, 26, 36, 46) abstützt.

9. Sitzbank (101) nach einem der Ansprüche 1 bis 7, **dadurch gekennzeichnet, dass** die Sitzkissen (103) Einzelkissen (103₁; 103₂) umfassen, für jeden Sitzplatz (111; 121) mit einem Sitzflächenabschnitt (103A₁; 103A₂), der sich auf der Sitzfläche (114; 124) abstützt, und einem Rückenlehnenabschnitt (103B₁; 103B₂), der sich an der Rückenlehne (116; 126) des diesem Sitzplatz (111; 121) zugeordneten Aufbaus (110; 120) abstützt.

10. Sitzbank (1) nach einem der vorangehenden Ansprüche, **dadurch gekennzeichnet, dass** die Mittel (60, 70; 160, 170) zum Versteifen die Aufbauten (10, 20, 30, 40; 110, 120) aneinander befestigen, unter Vermeidung jeglicher relativen Verschiebung, insbesondere jeglicher manuellen Verschiebung, von zumindest einem Abschnitt eines der Aufbauten (10, 20, 30, 40; 110, 120) in Bezug auf einen anderen Aufbau (10, 20, 30, 40; 110, 120) innerhalb des Gestells (2) der Sitzbank (1).

11. Sitzbank (1) nach einem der vorangehenden Ansprüche, **dadurch gekennzeichnet, dass** die Mittel (60, 70) zum Versteifen die Aufbauten (10, 20, 30, 40) aneinander befestigen, unter Vermeidung jeglicher relativen Verschiebung eines Aufbaus (10, 20, 30, 40), insbesondere jeglicher manuellen Verschiebung, in Bezug auf die anderen Aufbauten (10, 20, 30, 40) innerhalb des Gestells (2) der Sitzbank (1).

12. Sitzbank (101) nach einem der Ansprüche 1 bis 10, **dadurch gekennzeichnet, dass** die Sitzbank Mittel (113a, 113b, 115a, 115b) zum Regeln eines seitlichen Abstands (e130) zwischen den Aufbauten (110, 120) aufweist, wobei der Abstand (e130) gemäß einer Querrichtung (8-9) regelbar ist, in welcher die Aufbauten (110, 120) nebeneinander aufgereiht sind.

13. Sitzbank (101) nach Anspruch 12, **dadurch gekennzeichnet, dass** lediglich ein Abschnitt der Aufbauten (110, 120) mit Hilfe der Mittel (113a, 113b, 115a, 115b) zum Regeln des seitlichen Abstands (e130) gemäß der Querrichtung (8-9) gleitet.

14. Kraftfahrzeug (V1; V2), **dadurch gekennzeichnet, dass** das Kraftfahrzeug mit zumindest einer Sitzbank (1; 101) nach einem der Ansprüche 1 bis 13 ausgestattet ist.

## Claims

1. Seat (1; 101) adapted to equip an automotive vehicle (V1; V2), the seat (1; 101) comprising:
- a structure (2; 102) which supports seat cushions (3; 103) delimiting at least two places (11, 21, 31, 41; 111, 121) and
- for each place, a seat belt (51, 52, 53, 54; 151, 152) provided with three anchoring points (56, 57, 58; 156, 157, 158) which are fixed on the seat (1; 101) without a bracket,
the structure (2; 102) comprising at least two carcasses (10, 20, 30, 40; 110, 120) which are separate, disposed side by side and each provided with an underframe (12, 22, 32, 42; 112, 122), a base plate (14, 24, 34, 44; 114, 124) and a back (16, 26, 36, 46; 116, 126) on which the seat cushions (3; 103) rest, **characterised:**
- **in that** the seat (1; 101) comprises means (60, 70; 160, 170) for rigidifying the structure (2; 102) which are separate from means for fixing the brackets (12, 22, 32, 42; 112, 122) to a floor of the automotive vehicle (VI; V2) and which connect the carcasses (10, 20, 30, 40; 110, 120) to each other.

2. Seat (1) according to claim 1, **characterised in that** the carcasses (10, 20, 30, 40; 110, 120) have the same dimensions in a transverse direction (8 - 9) according to which the carcasses (10, 20, 30, 40; 110, 120) are aligned side by side.

3. Seat (1) according to one of the preceding claims, **characterised in that** the means (60, 70; 160, 170) for rigidifying the structure (2; 102) maintain the integrity of the structure (2; 102) during transport thereof, for example from an assembly unit for the seat (1) towards an assembly unit for the automotive vehicle (V1; V2).

4. Seat (101) according to one of the preceding claims, **characterised in that** at least some of the rigidification means (60, 70) connect the base plates (14, 24, 34, 44) of the carcasses (10, 20, 30, 40).

5. Seat (101) according to one of the preceding claims, **characterised in that** at least some (170) of the rigidification means (160, 170) connect the backs (116, 126) of the carcasses (110, 120).

6. Seat (101) according to one of the preceding claims, **characterised in that** at least some (160) of the rigidification means (160, 170) connect the underframes (112, 122) of the carcasses (110, 120).

7. Seat (1; 101) according to one of the preceding claims, **characterised in that** the rigidification means (60, 70; 160, 170) comprise rigid metallic bars connecting the carcasses (10, 20, 30, 40; 110, 120).

8. Seat (1) according to one of the claims 1 to 7, **characterised in that** the seat cushions (3) are integral with a base plate part (3A) which rests on all the base plates (14, 24, 34, 44) and a back part (3B) which rests on all the backs (16, 26, 36, 46).

9. Seat (101) according to one of the claims 1 to 7, **characterised in that** the seat cushions (103) comprise individual cushions (103₁; 103₂) with, for each place (111; 121), a base plate part (103A₁; 103A₂) which rests on the base plate (114; 124) and a back part (103B₁; 103B₂) which rests on the back (116; 126) of the carcass (110; 120) corresponding to this place (111; 121).

10. Seat (1) according to one of the preceding claims, **characterised in** the rigidification means (60, 70; 160, 170) integrate the carcasses (10, 20, 30, 40; 110, 120) to each other, whilst preventing any relative displacement, in particular any manual displacement, of at least one part of one of the carcasses (10, 20, 30, 40; 110, 120) relative to another carcass (10, 20, 30, 40; 110, 120) at the centre of the structure (2) of the seat (1).

11. Seat (1) according to one of the preceding claims, **characterised in that** the rigidification means (60, 70) integrate the carcasses (10, 20, 30, 40) to each other, whilst preventing any relative displacement, in particular any manual displacement, of one carcass (10, 20, 30, 40) relative to the other carcasses (10, 20, 30, 40) at the centre of the structure (2) of the seat (1).

12. Seat (101) according to one of the claims 1 to 10, **characterised in that** it comprises means (113a, 113b, 115a, 115b) for controlling lateral separation (e130) between the carcasses (110, 120), the separation being controllable in a transverse direction (8 - 9) according to which the carcasses (110, 120) are aligned side by side.

13. Seat (101) according to claim 12, **characterised in that** one part only of the carcasses (110, 120) slides in the transverse direction (8 - 9) thanks to means (113a, 113b, 115a, 115b) for controlling the lateral separation (e130).

14. Automotive vehicle (V1; V2), **characterised in that** it is equipped with at least one seat (1; 101) according to one of the claims 1 to 13.
